# EUROPÄISCHE PATENTSCHRIFT

(11) **EP 0 518 204 B1**
(45) Veröffentlichungstag und Bekanntmachung des Hinweises auf die Patenterteilung: **20.09.1995**
(21) Anmeldenummer: 92109392.8
(22) Anmeldetag: 03.06.1992
(51) Int. Cl.: H02G 7/05

(54) **Abspannklemme für freihängende Installationskabel**
Anchoring clamp for a freely suspended installation cable
Pince d'ancrage pour câble d'installation aérien libre

(30) Priorität: 07.06.1991 DE 9107037 U
(43) Veröffentlichungstag der Anmeldung: 16.12.1992
(73) Patentinhaber: Sichert GmbH & Co., D-12277 Berlin (DE)
(72) Erfinder: Hesse, Hans-Hermann, Dipl.-Ing., W-1000 Berlin 37 (DE)
(74) Vertreter: Vogeser, Werner, Dipl.-Ing.

(56) Entgegenhaltungen:
- DE-A- 2 342 524
- DE-A- 2 721 357
- DE-A- 3 123 591
- FR-A- 2 468 236

## Beschreibung

Die Erfindung betrifft eine Abspannklemme für freihängende Installationskabel, welche aus einer mit einer Aufhängeöse versehenen Lasche, deren Ränder zu Schenkeln aufgekantet sind, um so eine gegen das der Öse abgewandte Ende hin sich verjüngende Führung für zwei sich einander gegenüberliegende und an den Schenkeln der Lasche anliegende keilförmige Klemmbacken zu bilden, besteht, wobei die Klemmbacken an ihrer ausgekehlten Anlagefläche für das zu spannende Kabel mit reibungserhöhenden Vorsprüngen versehen sind.

Abspannklemmen der vorbezeichneten Art sind beispielsweise aus der DE-PS 23 42 524 bzw. DE-OS 29 41 914 bekanntgeworden. Diese Abspannklemmen haben den Nachteil, daß sie wegen ihrer außerordentlich stabilen und steifen Ausbildung ein unerwünscht hohes Gewicht haben. Eine einfacher ausgestaltete Abspannklemme, bei der jedoch Maßnahmen zur Versteifung der Lasche vorgesehen sind, ist aus DE-A-2 721 357 bekannt.

Der Erfindung liegt die Aufgabe zugrunde, Abspannklemmen der in Betracht kommenden Art derart zu verbessern, daß sie so leicht wie möglich ausgebildet und dennoch so stabil sind, daß sie ihre Aufgabe, das Kabel zwischen den Klemmbacken fest und sicher einzuspannen, ohne daß ein unerwünschter Schlupf eintritt, voll erfüllen.

Zur Lösung dieser Aufgabe wird gemäß der Erfindung vorgeschlagen, die fraglichen Abspannklemmen derart auszubilden, daß die Hohlkehlen in den Klemmbacken vom tiefsten Punkt an deren vorderen, schmaleren Ende zu deren hinteren, breiteren Ende gegenüber der Unterseite der Klemmbacken ansteigen, wobei sie dieser gegenüber die tiefstmögliche Lage einnehmen, ohne daß die Oberfläche der Hohlkehlen die Ebene der Unterseite der Klemmbacken bzw. einer in diesen befindlichen Nut schneidet.

Vorteilhafterweise ist in einer besonderen Ausführungsart der Erfindung zwecks gemeinsamen Verschiebens der Klemmbacken in gleicher Höhe längs der Abspannklemme vorgesehen, daß in der Unterseite der Klemmbacken eine Quernut angeordnet ist, in welche ein Querriegel eingreift, dessen eines Ende mit einer der beiden Klemmbacken fest verbunden ist.

Weitere Merkmale von Weiterbildungen der erfindungsgemäß ausgebildeten Abspannklemme gehen aus den Unteransprüchen sowie aus der nachstehenden Beschreibung eines bevorzugten Ausführungsbeispiels hervor, das in den Figuren 1 bis 4 der Zeichnung dargestellt ist. Es zeigen:
- Fig. 1: eine Seitenansicht der erfindungsgemäß ausgebildeten Abspannklemme für freihängende Installationskabel;
- Fig. 2: eine Aufsicht auf die Oberseite der Abspannklemme der Fig. 1;
- Fig. 3: eine Seitenansicht einer Klemmbacke auf die die Hohlkehle enthaltende Seite;
- Fig. 4: einen Querschnitt durch die beiden mittels eines Querriegels miteinander gekoppelten Klemmbacken.

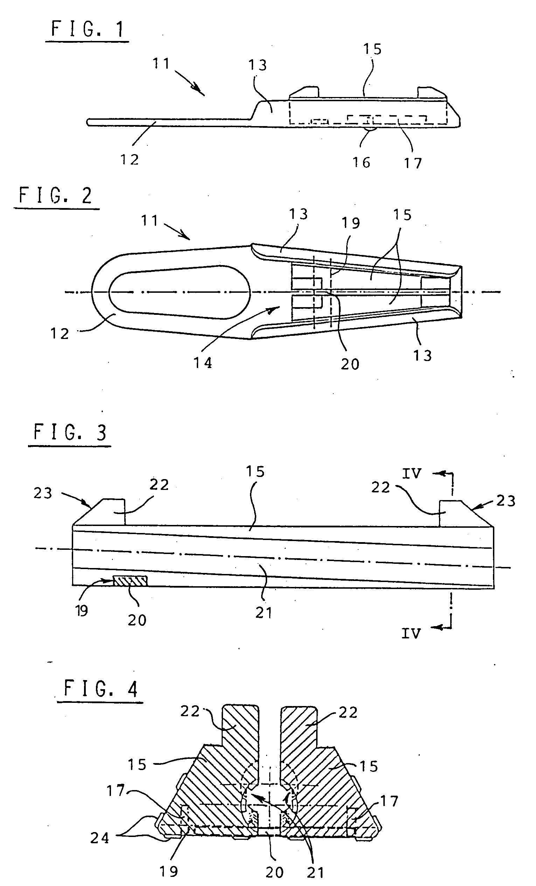

Die in den Figuren 1 und 2 dargestellte Abspannklemme besteht aus einer Lasche 11, die mit einer Aufhängeöse 12 versehen ist. An dem der Öse 12 gegenüberliegenden Ende sind die Schenkel 13 der Lasche 11 aufgekantet und bilden eine sich verjüngende Führung 14 für die an der Innenseite der Ränder 13 anliegenden keilförmigen Klemmbacken 15.

Die beiden Zapfen 16, welche jeweils in eine parallel zur äußeren Kante verlaufenden Nut 17 in der Unterseite der Klemmbacken 15 eingreifen, sorgen dafür, daß die beiden Klemmbacken 15 stets an den Innenseiten der aufgekanteten Ränder 13 der Lasche 11 anliegen und nicht aus der Führung 14 der Lasche 11 heraus fallen können. Diese Zapfen 16 bestehen vorteilhafterweise aus Kunststoff, sodaß sie nach Abtrennen ihres Kopfes mühelos entfernbar sind, um die Abspannklemme rasch zerlegen zu können, um wenn sie unbrauchbar geworden sind, rasch und einfach die Stahl- von den Kunststoffteilen trennen zu können.

Damit die Klemmbacken stets gemeinsam in Längsrichtung der Lasche 11 verschoben werden, um den Spalt 18 zwischen den Klemmbacken 15 zu öffnen, und in diesen das abzuspannende Kabel einlegen zu können, befindet sich in der Unterseite einer jeden Klemmbacken 15 eine Quernut 19, in welche ein flacher Querriegel 20 eingreift, dessen eines Ende mit einer Klemmbacke fest verbunden ist.

Wie insbesondere aus Fig. 3 hervorgeht, weisen die Klemmbacken 15 auf den einander zugekehrten Seiten eine Hohlkehle 21 auf, in welchen das einzuspannende Kabel liegt. Um eine gute, schlupfvermeidende Haftreibung zu erzielen, sind an der Wandung der Hohlkehle 21 warzenförmige, reibungserhöhende Vorsprünge angeordnet, deren Querschnittsprofil vorzugsweise die Form eines Sägezahnes aufweist.

Um eine niedrige Bauhöhe zu erreichen und um zwecks Gewichtsersparnis von einem möglichst dünnwandigen Blech für die Lasche 11 Gebrauch machen zu können, muß das einzuspannende Kabel gegenüber der Lasche 11 so tief wie möglich liegen. Zu diesem Zweck sind die Hohlkehlen 21, wie Fig. 3 erkennen läßt, derart geneigt angeordnet, daß die Oberfläche der Hohlkehlen 21 an keiner Stelle die Ebene der Unterseite der Klemmbacken 15 bzw. der in diesen befindlichen Nut 19 schneidet. Dadurch wird das durch die Klemmbacken 15 auf die abgekanteten Schenkel 13 der Lasche 11 ausgeübte Moment auf einem niedrigstmöglichen Wert gehalten. Das Gleiche Ziel ließe sich dadurch erreichen, daß man die Quernut 19 und den Querriegel 20 auf die Oberseite der Klemmbacken 15 verlegt.

Um die Klemmbacken 15 in einfacher Weise zu verkeilen oder die Verkeilung zu lockern, befinden sich an ihnen nach oben ragende Ambosse 22, deren Oberseiten 23 gegen die vordere bzw. hintere Stirnfläche der Klemmbacken 15 abwärts geneigt sind. Dadurch wird vorgegeben, mit einem Schlagwerkzeug immer in der richtigen Richtung gegen die Ambosse 22 zu schlagen, um eine Verletzung des Kabels zu vermeiden.

Es kann von Vorteil sein, an den Klemmbacken 15 flache, niedrige Gleitwarzen 24 vorzusehen, um die Reibung zwischen der Lasche und den Klemmbacken 15 bei deren Verschieben herabzusetzen.

## Patentansprüche

1. Abspannklemme für freihängende Installationskabel, bestehend aus einer mit einer Aufhängeöse (12) versehenen Lasche (11), deren Ränder (13) aufgekantet sind und gegen das der Öse (12) abgewandte Ende hin eine sich verjüngende Führung (14) für zwei sich einander gegenüberliegende und an den Rändern (13) der Lasche (11) anliegende, keilförmige Klemmbacken (15) bilden, deren einander gegenüberliegende Flächen mit einer Hohlkehle (21) für die Aufnahme des zu spannenden Kabels mit reibungserhöhenden Vorsprüngen versehen sind, dadurch gekennzeichnet, daß die Hohlkehlen (21) in den Klemmbacken (15) vom tiefsten Punkt an deren vorderen, schmaleren Ende zu deren hinteren, breiteren Ende gegenüber der Unterseite der Klemmbacken (15) ansteigen, wobei sie dieser gegenüber die tiefstmögliche Lage einnehmen, ohne daß die Oberfläche der Hohlkehlen (21) die Ebene der Unterseite der Klemmbacken (15) bzw. einer in diesen befindlichen Nut (19) schneidet.

2. Abspannklemme nach Anspruch 1, dadurch gekennzeichnet, daß vorzugsweise in der Unterseite der Klemmbacken (15) eine Quernut (19) angeordnet ist, in welche ein Querriegel (20) eingreift, dessen eines Ende mit einer der beiden Klemmbacken (15) fest verbunden ist.

3. Abspannklemme nach Anspruch 1 oder 2, dadurch gekennzeichnet, daß die in die Nuten (17) in den Klemmbacken (15) eingreifenden Führungszapfen (16) aus Kunststoff bestehen.

4. Abspannklemme nach Anspruch 1, 2 oder 3, dadurch gekennzeichnet, daß an denjenigen Flächen der Klemmbacken (15), die an den ihnen gegenüberliegenden Flächen der Lasche (11) entlanggleiten, flache Gleitwarzen (24) angeordnet sind.

5. Abspannklemme nach einem oder mehreren der Ansprüche 1 bis 4, dadurch gekennzeichnet, daß sowohl an dem hinteren, breiteren Ende als auch an dem vorderen, schmaleren Ende der Klemmbacken (15) über deren Oberseite nach oben ragende Ambosse (22) angeordnet sind, deren Oberseiten (23) nach hinten bzw. nach vorn abwärts geneigt sind.

## Claims

1. An anchoring clamp for freely suspended installation cables, comprising a plate (11) which is provided with a suspension eye (12) and whose edges (13) are turned up and towards the end remote from the eye (12) form a tapering guide (14) for two mutually oppositely disposed wedge-shaped clamping jaws (15) which bear against the edges (13) of the plate and whose mutually oppositely disposed surfaces are provided with a channel (21) for receiving the cable to be clamped, with friction-enhancing projections, characterised in that the channels (21) in the clamping jaws (15) rise relative to the underside of the clamping jaws (15) from the lowest point at the front narrower ends of the clamping jaws to the rear wider ends thereof, wherein they assume the lowest possible position relative to the underside of the clamping jaws without the surface of the channels (21) intersecting the plane of the underside of the clamping jaws (15) or a groove (19) provided in the clamping jaws.

2. An anchoring clamp according to claim 1 characterised in that a transverse groove (19) is preferably arranged in the underside of the clamping jaws (15), a transverse bar (20) of which one end is fixedly connected to one of the two clamping jaws (15) engaging into the transverse groove.

3. An anchoring clamp according to claim 1 or claim 2 characterised in that the guide pegs (16) which engage into the grooves (17) in the clamping jaws (15) comprise plastics material.

4. An anchoring clamp according to claim 1, claim 2 or claim 3 characterised in that flat slide projections (24) are arranged on those surfaces of the clamping jaws (15) which slide along the surfaces, which are disposed opposite thereto, of the plate (11).

5. An anchoring clamp according to one or more of claims 1 to 4 characterised in that disposed both at the rear wider ends and also at the front narrower ends of the clamping jaws (15) are anvil portions (22) which project upwardly beyond the top sides of the clamping jaws and the top sides (23) of which are inclined rearwardly and forwardly respectively.

## Revendications

1. Pince d'ancrage pour câble d'installation à suspension libre comprenant un collier (11) pourvu d'un oeil de suspension (12) dont les bords sont posés de chant et forment un guidage (14) se rétrécissant vers l'extrémité opposée à l'oeil (12), destiné à deux mâchoires de serrage (15) en forme de coin, lesquelles sont agencées de façon mutuellement opposée et en appui sur les bords (13) du collier (11), et dont les surfaces situées en face l'une de l'autre sont pourvues de rainures (21) destinées à la réception du câble à tendre et présentant des saillies augmentant le frottement, caractérisé en ce que les rainures (21) dans les mâchoires de serrage (15) remontent depuis le point le plus profond à leur extrémité avant plus étroite, vers leur extrémité arrière plus large par rapport au côté inférieur de la mâchoire de serrage (15), lesquelles occupent l'emplacement le plus profond possible par rapport à celles-ci sans que la surface des rainures (21) ne coupe le plan de la face inférieure de la- mâchoire de serrage (15) ou respectivement une gorge (19) se trouvant dans celle-ci.

2. Pince d'ancrage selon la revendication 1, caractérisée en ce qu'une gorge transversale (19) est agencée de préférence dans la face inférieure de la mâchoire de serrage (15), dans laquelle est engagée une entretoise (20), dont l'une des extrémités est solidement fixée à l'une des deux mâchoires de serrage (15).

3. Pince d'ancrage selon l'une des revendications 1 ou 2, caractérisée en ce que les ergots de guidage (16) s'engageant dans les gorges (17) situées dans la mâchoire de serrage (15) sont constitués en matière synthétique.

4. Pince d'ancrage selon l'une quelconque des revendications 1, 2 ou 3, caractérisée en ce que des bossages de coulissement plans (24) sont agencés sur les faces des mâchoires de serrage (15) qui glissent le long des surfaces du collier (11) qui leur sont opposées.

5. Pince d'ancrage selon une ou plusieurs des revendications 1 à 4, caractérisée en ce que tant à l'extrémité arrière plus large qu'à l'extrémité avant plus étroite, de la mâchoire de serrage (15), des enclumes (22) faisant saillie vers le haut sont agencées, dont les faces supérieures (23) sont inclinées en aval vers l'arrière, respectivement vers l'avant.
